# EUROPÄISCHE PATENTSCHRIFT

(11) **EP 0 850 747 B1**
(45) Veröffentlichungstag und Bekanntmachung des Hinweises auf die Patenterteilung: **25.09.2002**
(21) Anmeldenummer: 97121886.2
(22) Anmeldetag: 12.12.1997
(51) Int. Cl.: B29C 47/88

(54) **Vorrichtung zum Anlegen einer aus einer Breitschlitzdüse austretenden Folie an eine sich drehende Abzugswalze**
Apparatus for pinning a film, leaving a film die, onto a turning haul off drum
Dispositif pour l'application d'un film sortant d'une filière plate sur un tambour de tirage

(30) Priorität: 20.12.1996 DE 19653749
(43) Veröffentlichungstag der Anmeldung: 01.07.1998
(73) Patentinhaber: Mitsubishi Polyester Film GmbH, 65203 Wiesbaden (DE)
(72) Erfinder: Zimmermann, Uwe, 56357 Hainau (DE); Müller, Harald, Dr., 65232 Taunusstein (DE); Wacker, Detlef, Dr., 55129 Mainz (DE)
(74) Vertreter: Zounek, Nikolai, Dipl.-Ing.

(56) Entgegenhaltungen:
- EP-A- 0 245 108
- EP-A- 0 306 842
- EP-A- 0 707 940
- US-A- 3 655 307
- PATENT ABSTRACTS OF JAPAN vol. 097, no. 010, 31.Oktober 1997 & JP 09 141728 A (TOYOBO CO LTD), 3.Juni 1997,
- PATENT ABSTRACTS OF JAPAN vol. 013, no. 154 (M-814), 14.April 1989 & JP 63 317316 A (DIAFOIL CO LTD), 26.Dezember 1988,
- PATENT ABSTRACTS OF JAPAN vol. 014, no. 420 (M-1023), 11.September 1990 & JP 02 164517 A (DIAFOIL CO LTD), 25.Juni 1990,

## Beschreibung

Die Erfindung betrifft eine Vorrichtung zum Anlegen einer aus einer Breitschlitzdüse austretenden Folie an eine sich drehende Abzugswalze, mit zumindest zwei parallel und in geringem Abstand zu der Oberfläche der Abzugswalze angeordneten Elektroden, an die elektrische Spannung angelegt ist.

Bei der Herstellung von Folien, insbesondere verstreckten Dünnst- und Dünnfolien mit Dicken zwischen 1 µm und 30 µm, werden Kunststoffgranulate zunächst in einem Extruder aufgeschmolzen und die extrudierte Kunststoffschmelze einer Breitschlitzdüse zugeleitet. Die aus dieser Breitschlitzdüse austretende Vorfolie wird an eine Abzugs- und Kühlwalze angelegt und nach dem Verlassen der Abzugswalze in einem Streckrahmen in und quer zur Maschinenlaufrichtung gestreckt.

Zum Stabilisieren des Anlegens der Vorfolie an die Abzugswalze werden im Stand der Technik zusätzliche Kräfte auf die Vorfolie in dem Bereich zwischen dem Austritt der Vorfolie aus der Breitschlitzdüse und dem Anlegepunkt auf der Abzugswalze aufgebracht. Die aufgebrachten zusätzlichen Kräfte können durch Anblasen der Vorfolie mit einem Luftstrahl aus einem Luftmesser, das Einsprühen von Wasser in den Zwickel der Vorfolie vor dem Anlegepunkt auf der Abzugswalze, die Ausbildung eines Wasserfilms auf der Abzugswalze und die Erzeugung eines elektrischen Feldes mittels einer auf Hochspannung liegenden Elektrode erzeugt werden, wobei die Feldlinien des elektrischen Feldes auf die Oberfläche der Abzugswalze gerichtet sind. Die zusätzlich aufgebrachten Kräfte dienen dazu, die zwischen der Oberfläche der Abzugswalze und der Unterseite der Vorfolie, das ist die der Abzugswalze zugewandte Seite der Vorfolie, eingeschlossene Luft unter dem Zwickel der Vorfolie vor dem Anlegen der Vorfolie an die Abzugswalze seitlich hinauszudrängen, um so das Anlegen der Vorfolie an die Walzenoberfläche über einen vorgegebenen Umschlingungswinkel zu stabilisieren. Wenn dies nicht gelingt, entstehen mehr oder weniger große Lufteinschlüsse, sogenannte "Pinning"-Blasen, die sich zwischen der Vorfolienunterseite und der Oberfläche der Abzugswalze befinden und die Glätte und somit die Qualität der auf der Abzugswalze abgekühlten Vorfolie sowie der daraus biaxial gereckten Folie verschlechtern.

Es ist bekannt, als Elektrode ein Metallband aus Edelstahl parallel zu der Abzugswalzenoberfläche anzuordnen, wobei das Metallband im allgemeinen aus einer Metallfolie von etwa 20 µm Dicke in einer Breite von 10 mm ausgestanzt oder ausgeschnitten wird. Ein derartiges Metallband hat den Nachteil, daß es nicht ausreichend hohe Spannkräfte aufnehmen kann, die erforderlich sind, das Metallband mit der gewünschten Genauigkeit im gleichmäßigen Abstand zu der Abzugswalze zu spannen. Des weiteren ist nachteilig, daß die durch den Schneide- bzw. Stanzprozeß entstehenden Kanten des Metallbandes unregelmäßig sind, so daß das elektrische Feld zwischen dem Metallband und der Abzugswalze verzerrt wird. Diese Verzerrungen des elektrischen Feldes werden auch noch aufgrund eines ungleichmäßigen Abstandes des Metallbandes von der Abzugswalzenoberfläche verstärkt. Die Verzerrungen eines elektrischen Feldes führen einerseits zu elektrischen Überschlägen, durch die die Vorfolie beschädigt werden kann, und andererseits zu einem nicht gleichmäßigen Anlegen der Vorfolie an die Abzugswalze, wodurch weiterhin Lufteinschlüsse zwischen der Vorfolie und der Abzugswalze auftreten können. Die Verzerrungen des elektrischen Feldes führen insgesamt nicht zu der gewünschten Folienqualität.

In dem Dokument "Patent Abstracts of Japan, Vol. 13, No. 154, 14. April 1989" ist mit bezug auf die JP-A-63 317 316 eine Drahtelektrode beschrieben, die parallel zu der Oberfläche einer Kühlwalze angeordnet ist. Zusätzlich zu dieser Drahtelektrode sind zwei bis zehn weitere Drahtelektroden vorhanden, die parallel zu dieser Drahtelektrode verlaufen. Das Potential von 0 der Drehelektrode ist entweder positiv oder negativ, während das Potential der zusätzlichen Elektroden kleiner als das positive Potential von 0 der Drahtelektrode ist bzw. sind die Potentiale V1 größer als das negative Potential von 0 der Drahtelektrode.

Das Dokument "Patent Abstracts of Japan, Vol. 14, No. 420, 11. Sept. 1999" offenbart mit bezug auf die JP-A-02 164 517 drei Drahtelektroden zum Anlegen einer aus einer Breitschlitzdüse austretenden Folie an eine Kühlwalze. Eine weitere Elektrode befindet sich im Bereich zwischen der Folie und der Kühlwalze und richtet ein elektrostatisches Feld direkt auf die Oberfläche der Kühlwalze und auf die Rückseite der Folie. Die mittlere der drei Elektroden wirkt als Andruckelektrode und übt ein starkes Feld auf die Vorderseite der Folie aus. Die darunter befindliche weitere Elektrode hat umgekehrte Polarität zu dieser Elektrode. Die darüber angeordnete Elektrode hat die gleiche Polarität wie die Andruckelektrode. Diese bekannte Elektrodenanordnung besteht aus Drahtelektroden, wobei die Andruckelektrode das höchste Potential aufweist und die übrigen Elektroden, deren Drahtdurchmesser erheblich größer als derjenige der Andruckelektrode sind, auf niedrigerem Potential als die Andruckelektrode liegen. Andere Elektrodenformen als Drahtelektroden sind in diesem Dokument nicht beschrieben.

Aus der PCT-Anmeldung WO 95/21735 (deutsches Gebrauchsmuster G 9402 027) ist eine Vorrichtung zur Herstellung von Folien, insbesondere Dünn-bzw. Dünnstfolien, bekannt, mit einer rotierenden Walze, mit der eine plastisch verformbare, vorzugsweise durch eine Breitschlitzdüse zugeführte Folie gefördert und gereckt wird, wobei zwischen der Walze und einem parallel in geringem Abstand zu der Walze angeordneten Metallband eine elektrische Spannung angelegt ist, durch die die zugeführte Folie an die Walze angelegt wird, bei der das Metallband eine scharfe Längskante aufweist, die der Walze nächstliegend angeordnet und auf diese gerichtet ist. Die scharfe Längskante ist nach Art einer Schneidkante an einem spitz zulaufenden Bereich des Metallbandes ausgebildet, wobei das Metallband nächstliegend in einem Abstand kleiner 6 mm zur Walze angeordnet ist. Die Mittellinie des spitz zulaufenden Bereichs ist auf den Mittelpunkt der Walze fluchtend ausgerichtet. Der Einsatz einer derartigen Metallband-Elektrode verbessert die Folienqualität, jedoch nicht in dem erforderlichen Ausmaß, da zwar die Lufteinschlüsse in ihren Durchmessern kleiner und in ihrer Anzahl weniger werden, jedoch keineswegs in dem Ausmaß, wie dies angestrebt wird.

Aus der US-A - 5,494,619 ist ein elektrostatisches Pinning-Verfahren bekannt, bei dem eine Drahtelektrode zwischen einer Extrusionsdüse und einer Abzugswalze angeordnet ist. Eine auf Vorspannung liegende Abschirmung befindet sich zwischen der Extrusionsdüse und der Drahtelektrode. Die Vorspannung der Abschirmung beträgt 1 bis 10 kV, während an der Drahtelektrode eine Spannung von 6 bis 15 kV anliegt. Bei diesem Verfahren ist es wesentlich, möglichst eine hohe elektrostatische Ladung auf die an die Abzugswalze anzulegende Folie aufzubringen, im Vergleich zu einer Anordnung, bei der die Abschirmung auf Erdpotential liegt. Hierzu gibt es eine optimale Vorspannung der Abschirmung, die von der Spannung der Drahtelektrode abhängt, jedoch sich von dieser und dem Erdpotential wesentlich unterscheidet. Der Nettostrom bzw. die elektrostatische Ladung auf die Folie ergibt sich aus der Differenz zwischen dem Strom der Drahtelektrode und einem zuvor gemessenen Strom zu der Abschirmung, der erhalten wird, indem die Abschirmung mit Spannung beaufschlagt wird und die Drahtelektrode auf Erdpotential sich befindet. Für eine vorgegebene Spannung, die an der Drahtelektrode anliegt, resultiert aus einer niedrigen elektrischen Spannung an der Abschirmung eine hohe Stromerzeugung, aber auch eine große Anzahl von Feldlinien, die mehrheitlich auf der Abschirmung enden und nicht auf der Folie. Durch Erhöhung der Spannung an der Abschirmung sinkt der Strom, jedoch enden mehr Feldlinien auf der Folie, wodurch der größte Teil des Stromes auf die Folie gelenkt wird. Eine Überlagerung zweier elektrostatischer Felder findet nicht statt, da die elektrisch vorgespannte Abschirmung dazu dient, die auf sie gerichteten Feldlinien der Drahtelektrode in Richtung der Folie umzulenken.

Aufgabe der Erfindung ist es, eine Vorrichtung der eingangs beschriebenen Art derart weiterzubilden und zu verbessern, daß die Lufteinschlüsse signifikant kleiner und weniger werden als bei im Stand der Technik bekannten Anlegevorrichtungen für Folien.

Diese Aufgabe wird erfindungsgemäß durch eine Vorrichtung gemäß Anspruch 1 gelöst.

Vorteilhafte Ausgestaltungen der Erfindung sind in den abhängigen Ansprüchen angegeben.

Mit der Erfindung wird der Vorteil erzielt, daß durch Anwendung der speziellen additiven elektrischen Felder die Zahl der Lufteinschlüsse erheblich abnimmt und die Durchmesser der einzelnen Lufteinschlüsse im Schnitt zwischen 23 bis 39 % kleiner sind als beim Einsatz eines einzigen elektrischen Anlegefeldes.

Die Erfindung wird im folgenden anhand von zeichnerisch dargestellten Ausführungsbeispielen näher erläutert. Es zeigen:
- Fig. 1: in schematischer Ansicht eine erste Ausführungsform einer Anlegevorrichtung für eine Folie nach der Erfindung, mit einem Doppelband aus zwei Metallbändern als Elektroden,
- Fig. 2: eine zweite Ausführungsform einer Anlegevorrichtung nach der Erfindung, bei der zusätzlich zu dem Doppelband eine weitere Elektrode vorhanden ist,
- Fig. 3: eine der Erfindung nicht zugehörige Anlegevorrichtung, die ein einzelnes Metallband und eine weitere Elektrode umfaßt,
- Fig. 4: eine weitere der Erfindung nicht zugehörige Anlegevorrichtung, die ein einzelnes Metallband und eine gegenüber Fig. 3 abgewandelte Elektrode umfaßt,
- Fig. 5: eine weitere der Erfindung nicht zugehörige Anlegevorrichtung, die eine gegenüber Fig. 4 veränderte Elektrodenanordnung aufweist,
- Fig. 6a bis 6d: Aufnahmen von Folien, die mittels einer einzelnen Metallband-Elektrode und mit einem Doppelband aus zwei Metallband-Elektroden an die Abzugswalze angelegt wurden, bei zwei unterschiedlichen Folienbandlaufgeschwindigkeiten,
- Fig. 7a bis 7d: Aufnahmen von Folien, die mittels einer einzelnen Metallband-Elektrode einerseits und mit einer Metallband-Elektrode in Verbindung mit einer zusätzlichen Ringelektrode bzw. scheibenförmiger Elektrode andererseits an die Abzugswalze angelegt wurden, bei gleicher Folienbandlauf geschwindigkeit, und
- Fig. 8a und 8b: Aufnahmen von Folien, die mittels eines Doppelbandes aus zwei Metallbandelektroden einerseits und mit einem Doppelband aus zwei Metallbandelektroden in Verbindung mit einer zusätzlichen scheibenförmigen Elektrode andererseits an die Abzugswalze angelegt wurden.

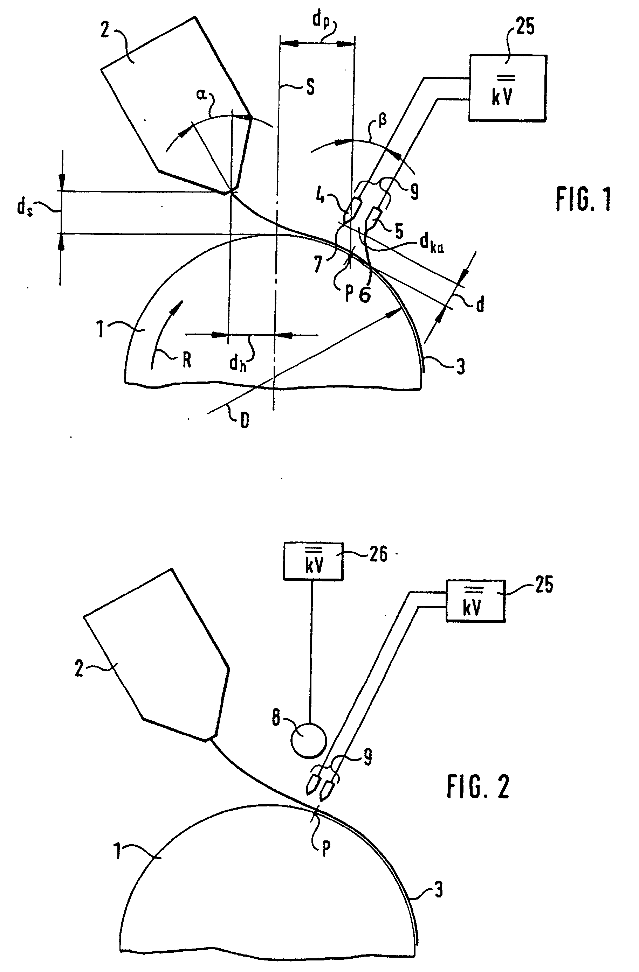

Die schematische Ansicht in Fig. 1 zeigt eine Abzugswalze 1 mit einem Durchmesser D, der 600 bis 1800 mm beträgt. Aus einer Breitschlitzdüse 2 wird eine Folie 3 extrudiert, die einen parabelförmigen Verlauf zwischen dem Austrittsschlitz der Breitschlitzdüse 2 und einem Anlegepunkt P auf der Oberfläche der Abzugswalze 1 hat. Bei dieser Folie 3 handelt es sich um eine sogenannte Vorfolie, die eine Dicke zwischen 0,015 bis 2,5 mm besitzt und eine Breite bis zu 3 m. Diese Folie 3 wird auf der Abzugswalze 1, die zugleich auch eine Kühlwalze ist, weitertransportiert und gelangt anschließend in einen nicht gezeigten Streck- bzw. Reckrahmen, in dem die Folie 3 in und quer zur Maschinenlaufrichtung gestreckt wird. Die Breitschlitzdüse 2 hat eine Breite im Bereich von 0,2 bis 2,9 m, insbesondere von mehr als 2 m.

Die Achse der Breitschlitzdüse 2 ist unter einem Winkel *α* zu einer Senkrechten S durch den Scheitelpunkt der Abzugswalze 1 geneigt. Der Winkel *a* liegt im Bereich von 20° bis 40°, und insbesondere ist *α* gleich 30°. Der senkrechte Abstand dₛ des Austrittsschlitzes der Breitschlitzdüse 2 von dem Scheitelpunkt der Abzugswalze 1 beträgt 15 bis 90 mm, insbesondere 70 mm. Das gleiche gilt für den horizontalen Abstand dₕ zwischen dem Austrittsschlitz der Breitschlitzdüse 2 und der Senkrechten S. Der Abstand dₕ beträgt 0 bis 90 mm, insbesondere 70 mm. In einem Abstand d gleich 3 bis 6 mm von der Oberfläche der Abzugswalze 1 sind, in Drehrichtung R der Abzugswalze 1 gesehen, vor dem Anlegepunkt P zwei Metallbänder 4 und 5 als Elektroden angeordnet, die zusammen ein sogenanntes Doppelband 9 bilden. Die beiden Metallbänder 4 und 5 sind gleichartig und zueinander parallel und an derselben Stromquelle 25 angeschlossen, bei der es sich um eine Hochspannungsquelle für Gleichstrom handelt, die an die beiden Metallbänder 4 und 5 eine Gleichspannung in der Größenordnung von 4 bis 12 kV bei einer Stromleistung von etwa 1 bis 10 mA anlegt. Der Abstand dₖₐ zwischen den Bandkanten 6 und 7 beträgt 0,10 bis 15 mm und bevorzugt 3 mm. Das Doppelband 9 bzw. die beiden Metallbänder 4 und 5 sind gegenüber der Senkrechten S durch den Scheitelpunkt der Abzugswalze 1 um den Winkel β geneigt, der im Bereich von 20 bis 40° liegt und insbesondere 30° beträgt. Der horizontale Abstand dₚ des näher zu der Senkrechten S liegenden Metallbandes 4 zu der Senkrechten S beträgt 30 bis 100 mm und insbesondere 90 bis 95 mm.

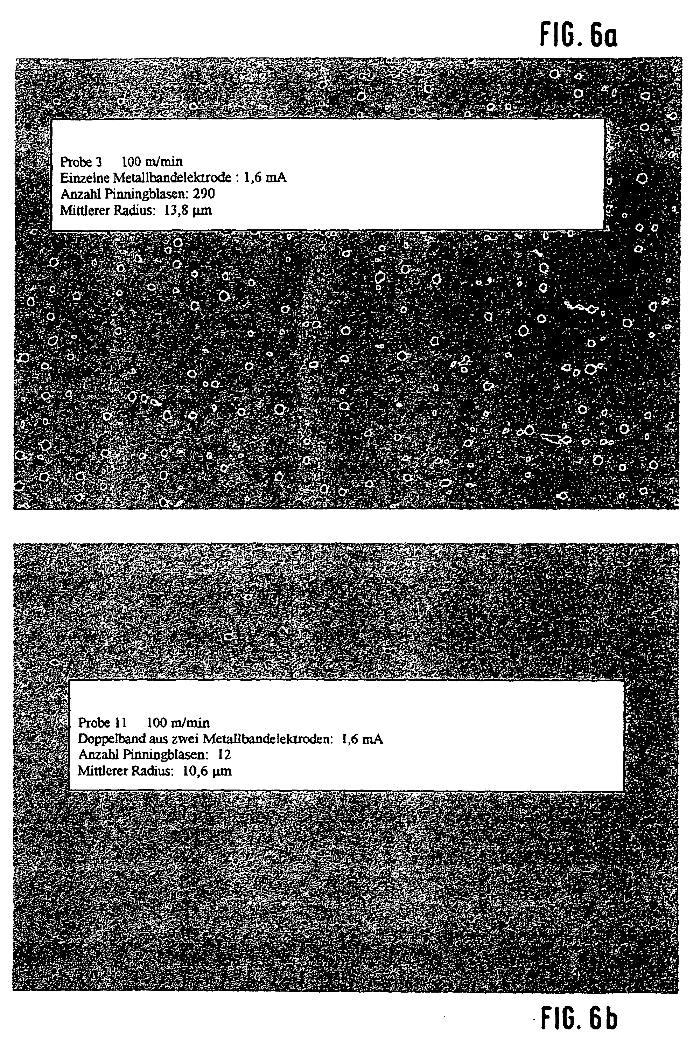

Der Einfluß des additiven elektrischen Feldes, das über das zweite Metallband 5 neben dem elektrischen Feld des ersten Metallbandes 4 auf die Folie 3 einwirkt, auf die Geometrie der Pinning-Blasen der Folie 3 im Vergleich zu dem Einfluß eines allein auf die Folie einwirkenden elektrischen Feldes des Metallbandes 4, bei sonst gleichen Bedingungen, wurde untersucht und wird nachstehend anhand der Figuren 6a bis 6d noch näher beschrieben.

In Fig. 2 ist schematisch eine zweite Ausführungsform einer Anlegevorrichtung nach der Erfindung gezeigt, die sich gegenüber der ersten Ausführungsform nach Fig. 1 nur dadurch unterscheidet, daß zusätzlich zu dem Doppelband 9 eine weitere Elektrode 8 vorhanden ist, die an eine separate Hochspannungsquelle 26 angeschlossen ist, welche die Elektrode 8 mit einer Spannung im Bereich von 5,0 kV bis 15 kV beaufschlagt. Bei dieser Elektrode 8 handelt es sich um eine Ringelektrode mit kreisförmigem Querschnitt, die einen Durchmesser von 10 bis 100 mm, insbesondere von 75 mm, hat. Diese Elektrode 8 ist 5 bis 30 mm, bevorzugt 20 mm, senkrecht oberhalb des Anlegepunktes P der Folie 3 an die Abzugswalze 1 angeordnet. Der Abstand der zusätzlichen Elektrode 8 von der Abzugswalze 1 richtet sich nach der Größe der angelegten Hochspannung an die Elektrode 8. Dabei wird der Abstand so gewählt, daß Überschläge weitgehend vermieden werden, da diese zu einer erheblichen Qualitätsminderung der Folie führen würden. Durch das Zuschalten eines weiteren additiven elektrischen Feldes durch die Elektrode 8 verändert sich die Bahn des Schmelzefilms von der Breitschlitzdüse 2 bis zum Anlegen an die Abzugswalze 1 nicht. Durch das zusätzliche additive elektrische Feld der Elektrode 8 wird die Anlegekraft auf den Schmelzefilm erhöht, wodurch es zu einer deutlichen Verbesserung der Vorfolienqualität hinsichtlich der Pinning-Blasen kommt, was sich in der Weise bemerkbar macht, daß die Anzahl der Pinning-Blasen erheblich zurückgeht, ebenso die Größe dieser Lufteinschlüsse.

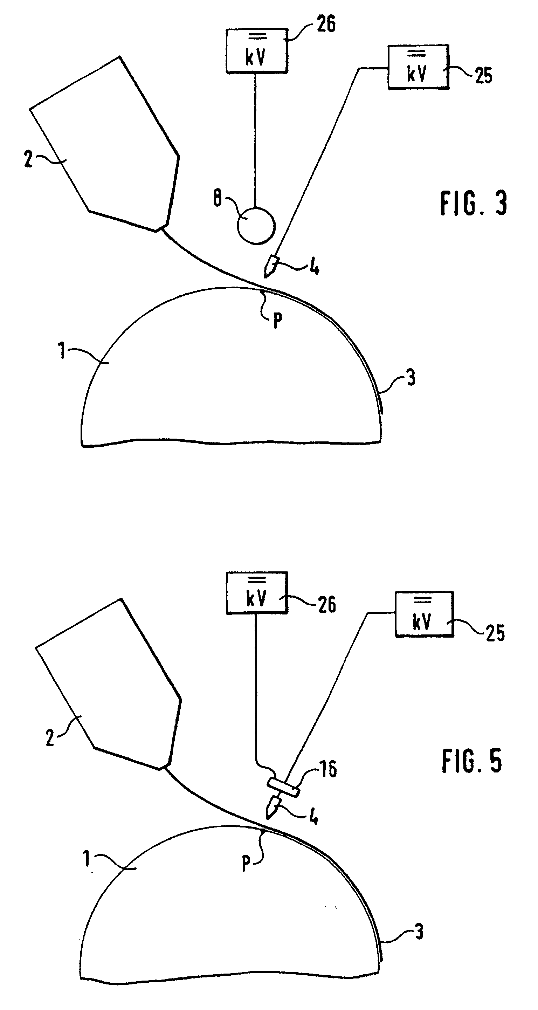

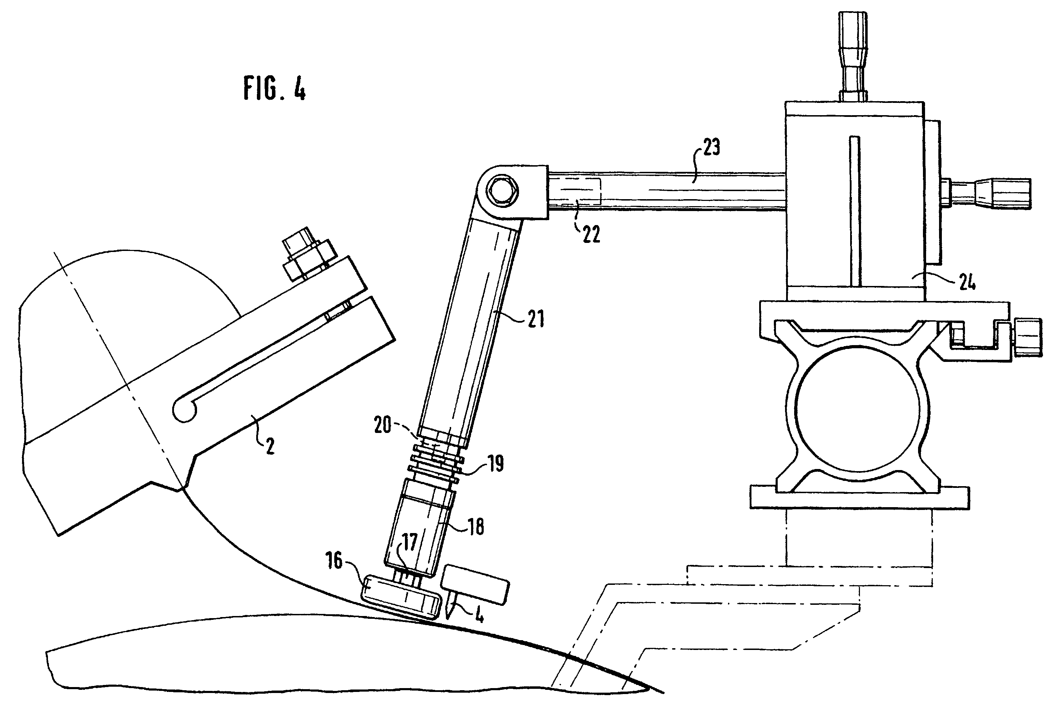

In Fig. 3 ist eine des Erfindung nicht zugehörige Anlegevorrichtung gezeigt, die ein einzelnes Metallband 4 in Kombination mit einer weiteren Elektrode 8 umfaßt. Auch bei dieser Ausführungsform wird durch das additive elektrische Feld der Elektrode 8 die Anlegekraft an den Schmelzefilm vor dem Auftreffen auf die Abzugswalze 1 erhöht. Die Elektrode 8 wird ebenso wie bei der zweiten Ausführungsform der Anlegevorrichtung von einer Hochspannungsquelle 26 mit einer Gleichspannung im Bereich von 5 kV bis 15 kV beaufschlagt. Das Metallband 4 ist mit einer Hochspannungsquelle 25 verbunden, die eine Gleichspannung im Bereich von 4 bis 12 kV an diese Bandelektrode anlegt. Die Elektrode 8 ist gleichfalls eine Ringelektrode mit kreisförmigem Querschnitt und befindet sich 3 bis 30 mm senkrecht über dem Anlegepunkt der Folie 3 an die Abzugswalze 1. Der bevorzugte Abstand beträgt 20 mm. Der Durchmesser der Elektrode 8 beträgt 10 bis 100 mm, insbesondere 75 mm.

Eine weitere der erfindung nicht zugehörige Anlegevorrichtung für die Folie an die Abzugswalze 1 ist in Fig. 4 gezeigt. Diese Anlegevorrichtung umfaßt ein Metallband 4 und eine unmittelbar vor dem Metallband 4 angeordnete scheibenförmige Elektrode 16. Der Abstand dieser scheibenförmigen Elektrode 16 von der Oberfläche der Abzugswalze 1 kann im Bereich von 3 bis 12 mm verstellt werden. Die scheibenförmige Elektrode 16 ist mittels einer Zylinderschraube 17 an ein Zwischenstück 18 angeschraubt, das mit einem gerippten Isolator 19 verbunden ist. Ein Stück dieser Elektrodenbefestigung ist ein Gelenk, das aus einem längeren Gelenkstück 21 und einem kürzeren Gelenkstück 22 besteht. Der gerippte Isolator 19 ist mittels einer weiteren Zylinderschraube 20 an dem längeren Gelenkstück 21 angeschraubt. Das kürzere Gelenkstück 22 ist mit einem Halter 23 verbunden, der in einem höhen- und horizontal verstellbaren Schlitten 24 gelagert ist. Der Schlitten 24 kann auf Schienen verfahren werden, die entlang der Maschinenlaufrichtung der Folienanlage angebracht sind. An die scheibenförmige Elektrode 16 wird eine Spannung im Bereich von 5 bis 15 kV über eine nichtgezeigte Hochspannungsquelle angelegt. Der Abstand der Elektrode 16 von der Oberfläche der Abzugswalze 1 wird dabei auf 3 bis 12 mm eingestellt.

Die in Fig. 5 gezeigte weitere der Erfindung nicht zugehörige Anlegevorrichtung unterscheidet sich nur in der gegenseitigen Lage der Elektroden 4 und 16 von der Ausführungsform nach Fig. 4. Die scheibenförmige Elektrode 16 befindet sich dabei oberhalb des Metallbandes 4 und nicht vor dem Metallband, wie in Fig. 4. Der Abstand der Elektrode 16 von der Oberfläche der Abzugswalze 1 beträgt 15 bis 30 mm, und an die Elektrode 16 liegt eine Spannung von 12 bis 25 kV an. Das Metallband 4 ist 3 bis 12 mm von der Oberfläche der Abzugswalze 1 beabstandet, und die an das Metallband 4 angelegte Spannung beträgt 4 bis 12 kV.

Die Figuren 6a bis 6d zeigen die Geometrien der Pinning-Blasen von ausgewählten Proben einer Vorfolie, die einerseits mittels einer Anlegevorrichtung aus einer einzelnen Metallband-Elektrode und andererseits mit Hilfe einer Anlegevorrichtung aus einem Doppelband 9 aus zwei Metallband-Elektroden gemäß der ersten Ausführungsform nach Fig. 1 an die Abzugswalze 1 angelegt wird.

Die Folienbandlaufgeschwindigkeiten betragen 100 m/min und 120 m/min. Weitere Angaben zu den Parametern der zu vergleichenden Anlegevorrichtungen und der untersuchten Proben ergeben sich aus den nachstehenden

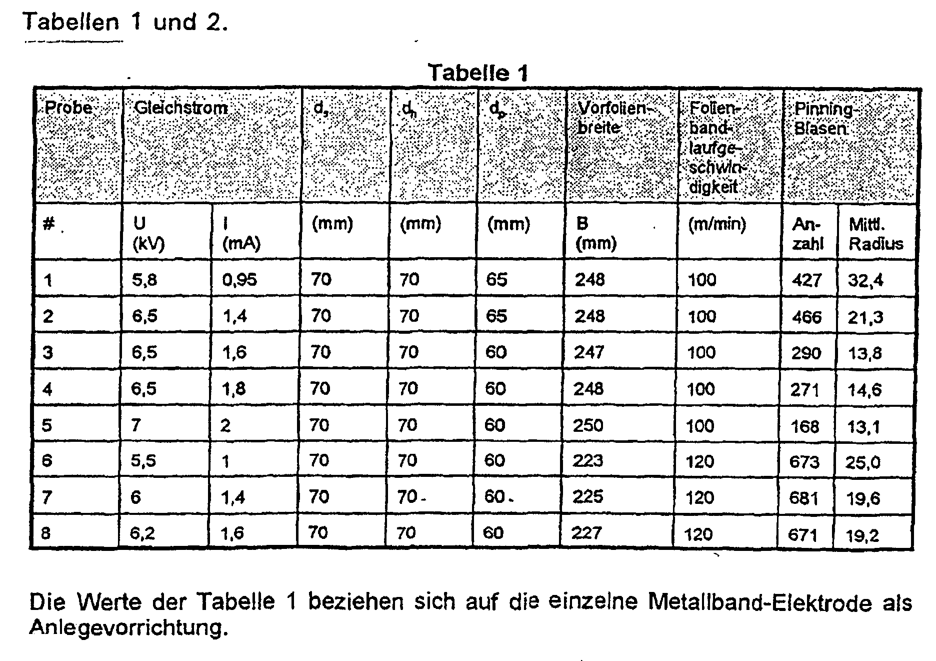

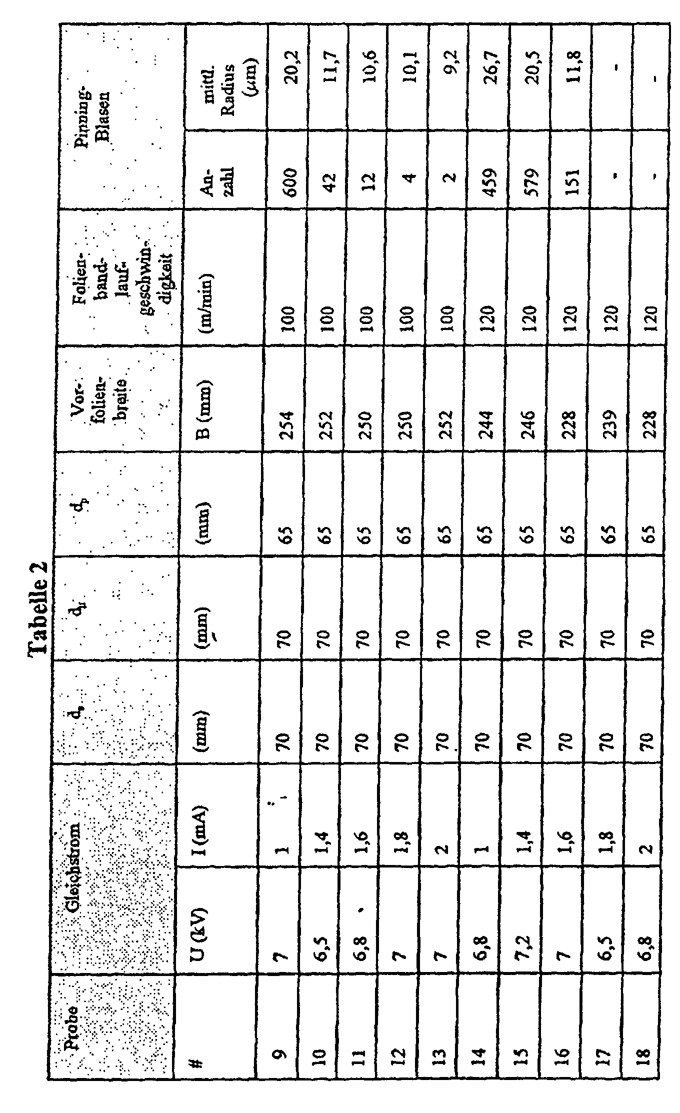

Die Werte der Tabelle 2 beziehen sich auf das Doppelband 9 aus zwei Metallband-Elektroden 4 und 5 als Anlegevorrichtung.

Bei einer Folienbandlaufgeschwindigkeit von 100 m/min für die einzelne Metallband-Elektrode liegen die angelegten Hochspannungen im Bereich von 5,8 bis 7 kV und die Stromstärken zwischen 0,95 bis 2 mA.

Bei einer Folienbandlaufgeschwindigkeit von 120 m/min beträgt die Hochspannung 5,5 bis 6,2 kV und die Stromstärke 1 bis 1,6 mA.

Bei einer Folienbandlaufgeschwindigkeit von 100 m/min und dem Einsatz eines Doppelbands 9 liegen die Hochspannungen an dem Doppelband zwischen 6,5 und 7 kV und die Stromstärken bei 1 bis 2 mA. Mit zunehmender Folienbandlaufgeschwindigkeit auf 120 m/min liegt an dem Doppelband 9 eine Hochspannung zwischen 6,5 bis 7,2 kV an, und die Stromstärke beträgt 1 bis 2 mA. Mit weiter steigenden Folienbandlaufgeschwindigkeiten erhöht sich auch die angelegte Hochspannung an das Doppelband 9 und bevorzugte Spannungen, die an das Doppelband 9 angelegt werden, liegen im Bereich von 4 bis 12 kV, insbesondere von 6,5 bis 7,5 kV.

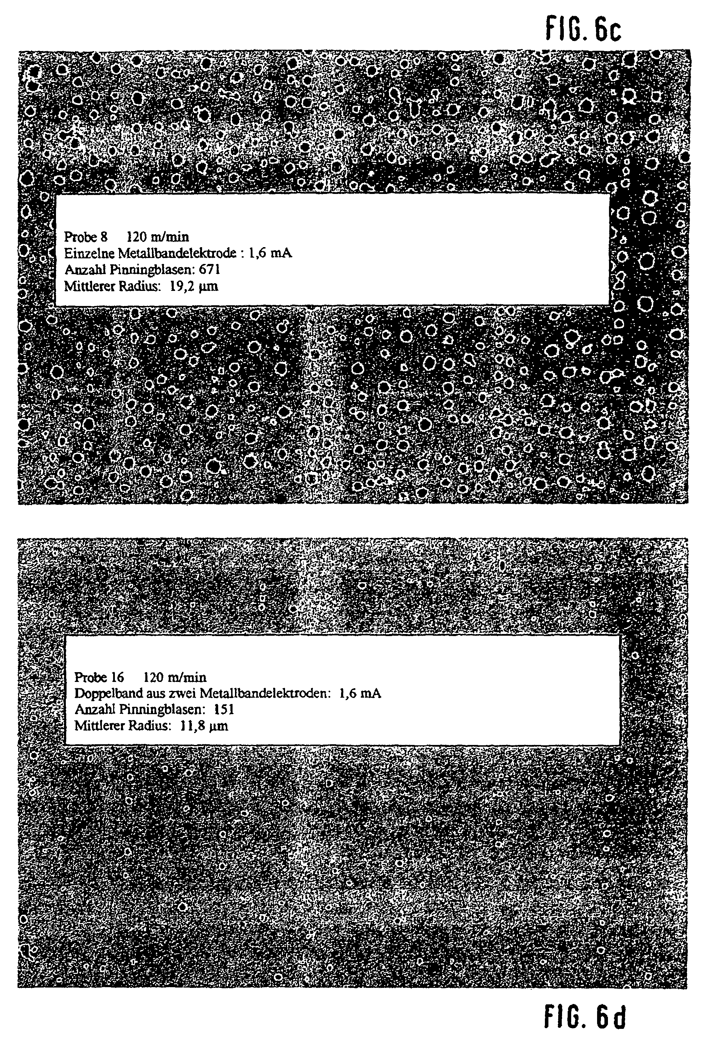

Die Geometrien der Pinning-Blasen der aus den Tabellen 1 und 2 ausgewählten Proben 3 und 11 bzw. 8 und 16 sind den Figuren 6a, 6b bzw. 6c und 6d einander gegenübergestellt. Gemäß den Fig. 6a und 6b betragen die mittleren Radien der Pinning-Blasen 13,8 µm und 10,6 µm, was eine Abnahme von 23 bis 23,2 % des mittleren Blasenradius bei Einsatz eines Doppelbandes aus zwei Metallband-Elektroden anstelle einer einzelnen Metallband-Elektrode bedeutet. Des weiteren ist aus den Figuren offensichtlich, daß nicht nur die mittleren Radien der Blasen, sondern auch die Anzahl der Pinning-Blasen durch das additive elektrische Feld des Doppelbandes stark abnehmen, nämlich von 290 Blasen auf 12 Blasen.

Gemäß den Figuren 6c und 6d betragen die mittleren Radien der Pinning-Blasen 19,2 µm und 11,8 µm, d.h. der mittlere Radius ist bei Einsatz eines Doppelbandes gegenüber einer einzelnen Metallband-Elektrode rund 38,5 % bis 39 % kleiner.

In Tabelle 3 sind die Parameter einer Anlegevorrichtung aus einer einzelnen Metallband-Elektrode sowie einer einzelnen Metallband-Elektrode in Kombination mit einer Elektrode gemäß der Fig. 3 zusammengestellt. Bei einer Folienbandlaufgeschwindigkeit von 100 m/min liegt an der Metallband-Elektrode eine Hochspannung von 6,8 bis 7,0 kV an, und es fließt ein Strom von 1,5 mA. Im Falle einer Anlegevorrichtung, bestehend aus Metallband-Elektrode und einer weiteren Elektrode, beispielsweise in Gestalt einer Ringelektrode, beträgt die Hochspannung an der Metallband-Elektrode 6,8 kV, bei einem Strom von 1,4 mA. An der weiteren Elektrode liegt dabei eine Hochspannung von 6 kV an, der Strom ist nahezu null.

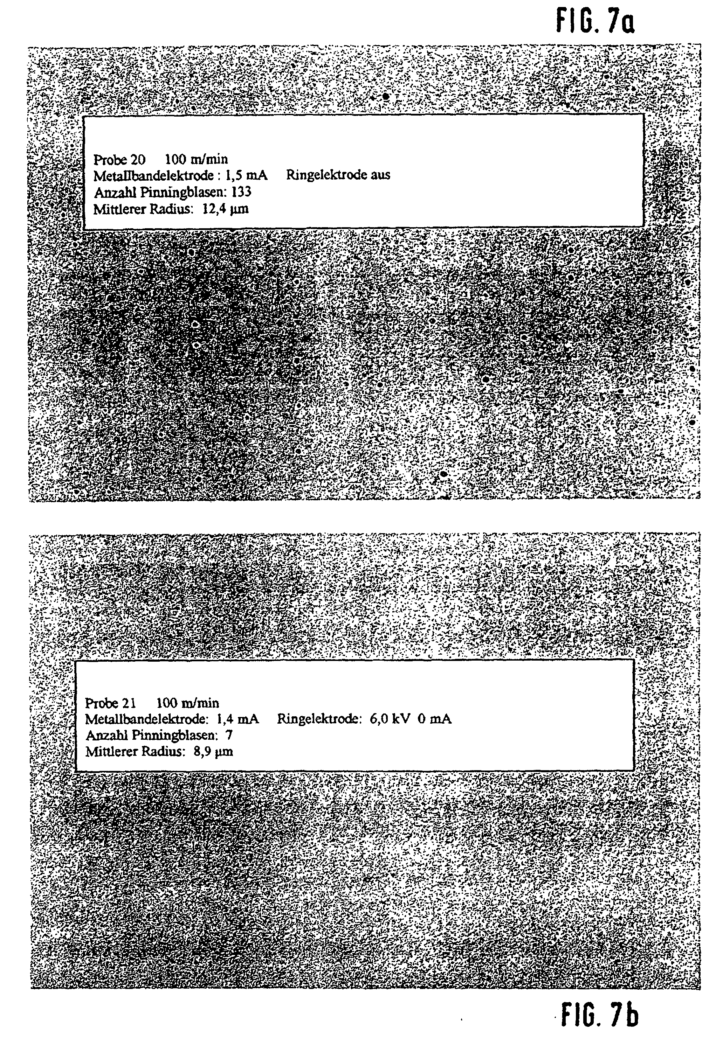

Die Figuren 7a und 7b der Proben 20 und 21 aus Tabelle 3 zeigen die Geometrien der Pinning-Blasen. In Fig. 7a beträgt der mittlere Radius der Pinning-Blasen 12,4 µm, und in Fig. 7b beträgt dieser Radius 8,9 µm, d.h. der mittlere Radius nach Fig. 7b ist rund 28,2 % kleiner als in Fig. 7a. Auch die Anzahl der Pinning-Blasen ist bei Einsatz der dritten Ausführungsform zum Anlegen der Folie 3 kleiner als bei einer Anlegevorrichtung, die ohne zusätzliches additives elektrisches Feld arbeitet. Die Anzahl der Pinning-Blasen verringert sich von 113 auf 7.

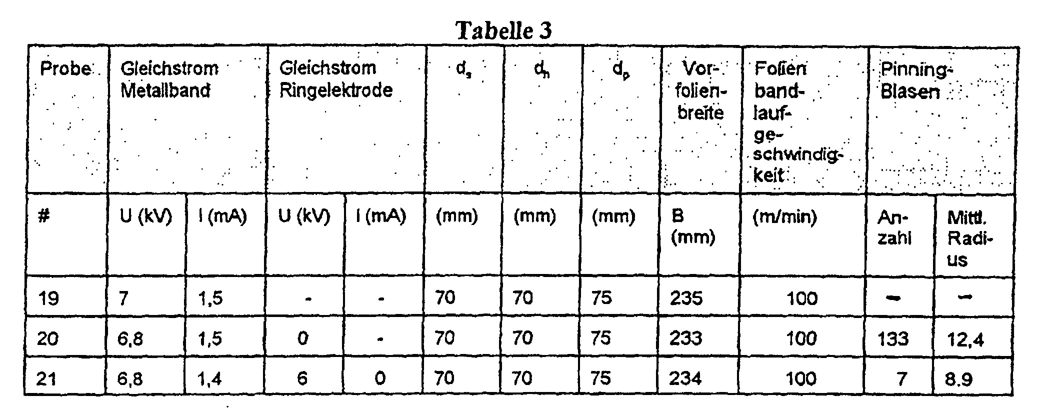

Die Werte der Tabelle 3 beziehen sich auf eine einzelne Metallband-Elektrode und eine Metallband-Elektrode in Kombination mit einer weiteren Elektrode als Anlegevorrichtung.

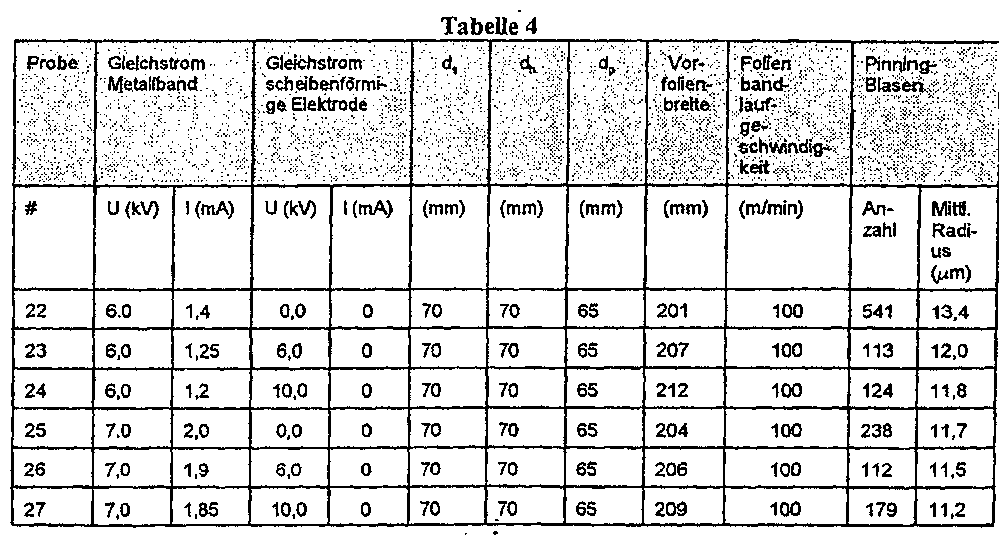

Die Werte der Tabelle 4 beziehen sich auf eine einzelne Metallband-Elektrode in Kombination mit einer scheibenförmigen Elektrode als Anlegevorrichtung

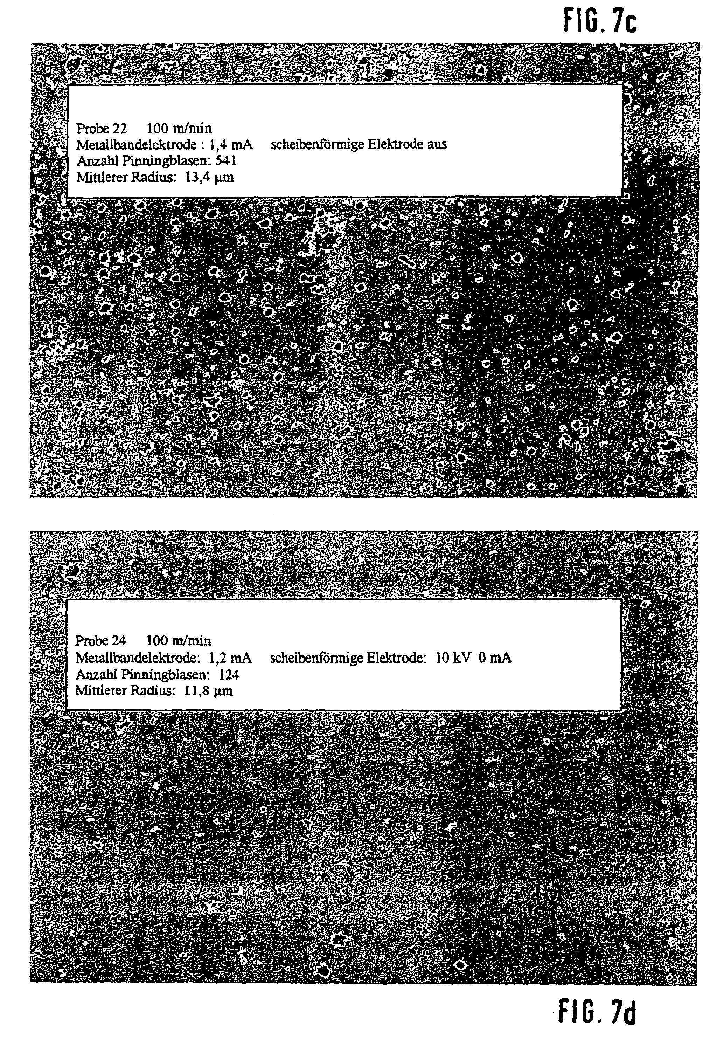

Die Figuren 7c und 7d der Proben 22 und 24 aus Tabelle 4 zeigen die Geometrien der Pinning-Blasen, bei Einsatz einer Anlegevorrichtung aus einer einzelnen Metallband-Elektrode in Kombination mit einer scheibenförmigen Elektrode gemäß der Fig. 5. Die Folienbandlaufgeschwindigkeit beträgt durchgehend 100 m/min, und es liegt an der Metallband-Elektrode eine Hochspannung von 6,0 bis 7,0 kV an, und es fließt ein Strom von 1,2 bis 2,0 mA, während die Hochspannung der scheibenförmigen Elektrode 0 bis 10 kV beträgt und der Gleichstrom nahezu null ist.

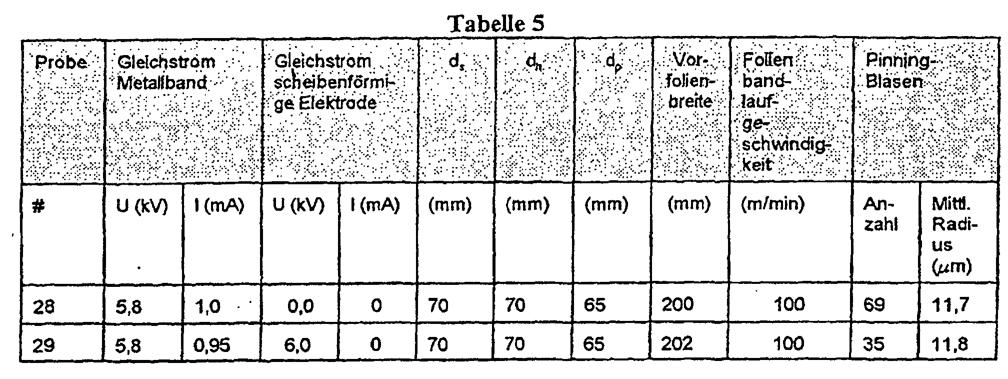

Die Werte der Tabelle 5 beziehen sich auf ein Doppelband aus zwei Metallband-Elektroden und ein Doppelband in Verbindung mit einer scheibenförmigen Elektrode als Anlegevorrichtung.

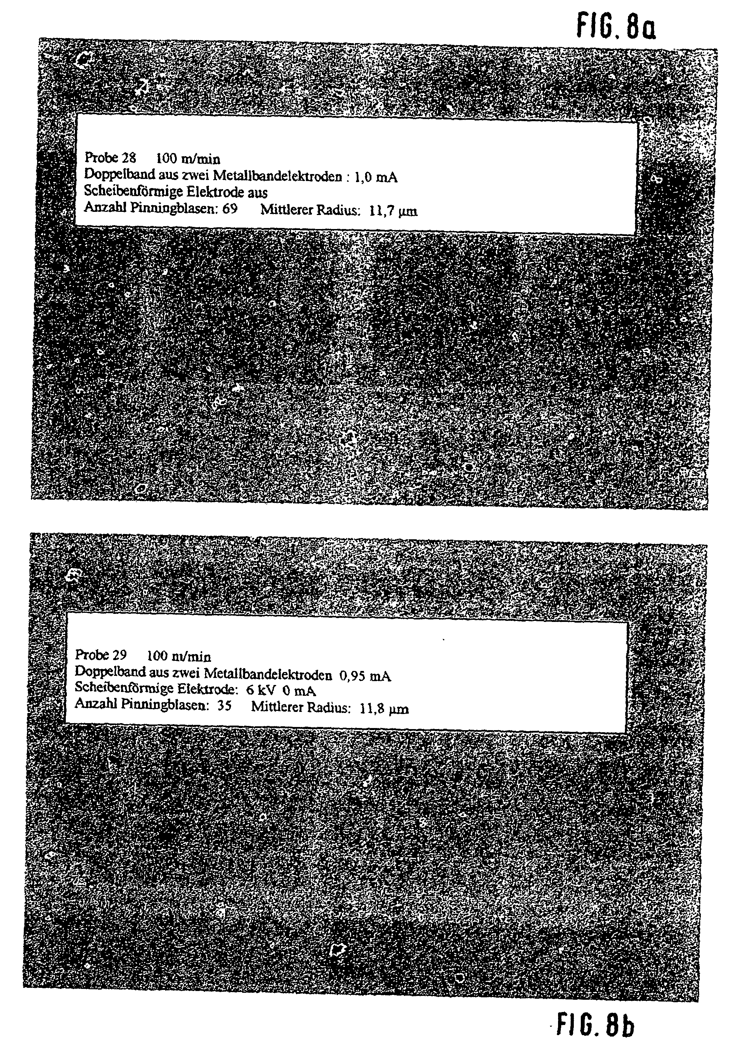

Die Figuren 8a und 8b der Proben 28 und 29 aus Tabelle 5 zeigen im Vergleich die Pinning-Blasen bei Einsatz einer Anlegevorrichtung aus einem Doppelband 9 (vgl. Fig. 1) bzw. aus einem Doppelband 9 in Verbindung mit einer scheibenförmigen Elektrode 16. Die letztere Anlegevorrichtung ist zeichnerisch nicht dargestellt, ihre Konfiguration bezüglich der Maße, Abstände udgl. entspricht derjenigen der Ausführungsform nach Fig. 5, wenn anstelle der einzelnen Metallband-Elektrode 4 ein Doppelband 9 vorgesehen wird. Die Folienbandlaufgeschwindigkeit beträgt jeweils 100 m/min. Die an dem Doppelband 9 anliegende Hochspannung beträgt in beiden Fällen 5,8 kV, während an der scheibenförmigen Elektrode eine Hochspannung von 6,0 kV anliegt. Die Anzahl der Pinning-Blasen geht von 69 auf 35 zurück, wenn zu dem elektrischen Feld des Doppelbandes 9 noch das elektrische Feld der scheibenförmigen Elektrode 16 hinzukommt. Der mittlere Radius der Pinning-Blasen verändert sich dabei nur geringfügig von 11,7 µm auf 11,8 µm.

## Patentansprüche

1. Vorrichtung zum Anlegen einer aus einer Breitschlitzdüse (2) austretenden Folie (3) an eine sich drehende Abzugswalze (1), mit zumindest zwei parallel und in geringem Abstand zu der Oberfläche der Abzugswalze (1) angeordneten Elektroden, an die elektrische Spannung angelegt ist, wobei eine erste Elektrode aus einem ersten Metallband (4) und eine zweite Elektrode aus einem zweiten gleichartigen Metallband (5) bestehen, wobei die beiden Metallbänder (4, 5) ein Doppelband (9) bilden, an eine erste Stromquelle (25) angeschlossen sind und jeweils eine zusammenlaufende Bandkante (6, 7) aufweisen, die auf die Oberfläche der Abzugswalze (1) gerichtet ist.

2. Vorrichtung nach Anspruch 1, **dadurch gekennzeichnet, dass** der Abstand zwischen den Bandkanten (6, 7) der Metallbänder (4, 5) 0,1 bis 15 mm beträgt und dass die angelegte Spannung an das Doppelband (9) im Bereich von 4 bis 12 kV liegt.

3. Vorrichtung nach Anspruch 1, **dadurch gekennzeichnet, dass** oberhalb des Doppelbandes (9) eine zusätzliche Elektrode (8) angeordnet ist, an der eine zusätzliche Spannung einer zweiten Stromquelle (26) zu der elektrischen Spannung der ersten Stromquelle (25) an dem Doppelband (9) anliegt.

4. Vorrichtung nach Anspruch 3, **dadurch gekennzeichnet, dass** die an die zusätzliche Elektrode (8) angelegte Spannung im Bereich von 5 kV bis 15 kV liegt.

5. Vorrichtung nach Anspruch 3, **dadurch gekennzeichnet, dass** die zusätzliche Elektrode (8) eine Ringelektrode mit kreisförmigem Querschnitt ist, der einen Durchmesser von 10 bis 100 mm, insbesondere von 75 mm, hat und dass die dritte Elektrode (8) 3 bis 30 mm senkrecht oberhalb des Anlegepunktes der Folie (3) an die Abzugswalze (1) angeordnet ist.

6. Vorrichtung nach Anspruch 1, **dadurch gekennzeichnet, dass** der waagerechte und der senkrechte Abstand der Breitschlitzdüse (2) vom Scheitelpunkt der Abzugswalze (1) jeweils 15 bis 90 mm beträgt, dass die Achse der Breitschlitzdüse einen Winkel zwischen 20 ° und 40° mit der Senkrechten (S) durch den Scheitelpunkt der Abzugswalze (1) einschließt und dass die Abzugswalze (1) einen Durchmesser (D) von 600 bis 1800 mm hat.

7. Vorrichtung nach Anspruch 1, **dadurch gekennzeichnet, dass** die Neigung des Doppelbandes (9) gegenüber der Senkrechten (S) durch den Scheitelpunkt der Abzugswalze (1) 20° bis 40° beträgt und dass der Abstand des näher zu der Senkrechten (S) liegenden ersten Metallbandes (4) zu der Senkrechten (S) im Bereich von 30 bis 100 mm liegt.

8. Vorrichtung nach Anspruch 3, **dadurch gekennzeichnet, dass** die zusätzliche Elektrode (16) eine scheibenförmige Elektrode ist, die mittels einer Zylinderschraube (17) an ein Zwischenstück (18) angeschraubt ist, das mit einem gerippten Isolator (19) verbunden ist, der mit Hilfe einer zweiten Zylinderschraube (20) an einem längeren Gelenkstück (21) befestigt ist und dass ein kürzeres Gelenkstück (22) mit einem Halter (23) verbunden ist, der in einem höhen- und horizontal verstellbaren Schlitten (24) gelagert ist.

9. Vorrichtung nach Anspruch 8, **dadurch gekennzeichnet, dass** an der scheibenförmigen vierten Elektrode (16) eine Spannung von 5 bis 15 kV anliegt und dass der Abstand der vierten Elektrode (16) von der Oberfläche der Abzugswalze (1) 3 bis 30 mm beträgt.

10. Vorrichtung nach Anspruch 8, **dadurch gekennzeichnet, dass** an dem Doppelband (9) eine Spannung im Bereich von 4 bis 12 kV und an der scheibenförmigen Elektrode (16) eine Spannung von 5 kV bis 15 kV anliegt.

## Claims

1. Device for laying a film (3) emerging from a slot die (2) onto a rotating take-off roll (1), having at least two electrodes that are arranged parallel to and at a short distance from the surface of the take-off roll (1) and to which electric voltage is applied, a first electrode comprising a first metal strip (4) and a second electrode comprising a second metal strip (5) of the same type, the two metal strips (4, 5) forming a double strip (9) and being connected to a first power source (25) and in each case having a tapering strip edge (6, 7) that is directed towards the surface of the take-off roll (1).

2. Device according to Claim 1, **characterized in that** the distance between the strip edges (6, 7) of the metal strips (4, 5) is 0.1 to 15 mm, and **in that** the voltage applied to the double strip (9) lies in the range from 4 to 12 kV.

3. Device according to Claim 1, **characterized in that** there is arrayed above the double strip (9) an additional electrode (8) at which a voltage from a second power source (26), additional to the electric voltage from the first power source (25), is applied to the double strip (9).

4. Device according to Claim 3, **characterized in that** the voltage applied to the additional electrode (8) lies in the range from 5 kV to 15 kV.

5. Device according to Claim 4, **characterized in that** the additional electrode (8) is an annular electrode of circular cross section, which has a diameter of 10 to 100 mm, in particular of 75 mm, and **in that** the third electrode (8) is arranged 3 to 30 mm vertically above the point where the film (3) is laid onto the take-off roll (1).

6. Device according to Claim 1, **characterized in that** the horizontal and vertical distance of the slot die (2) from the vertex of the take-off roll (1) is 15 to 90 mm in each case, **in that** the axis of the slot die includes an angle between 20° and 40° with the vertical (S) through the vertex of the take-off roll (1), and **in that** the take-off roll (1) has a diameter (D) of 600 to 1800 mm.

7. Device according to Claim 1, **characterized in that** the inclination of the double strip (9) with respect to the vertical (S) through the vertex of the take-off roll (1) is 20° to 40°, and **in that** the distance of the first metal strip (4) lying closer to the vertical (S) from the perpendicular (S) lies in the range from 30 to 100 mm.

8. Device according to Claim 3, **characterized in that** the additional electrode (16) is a disc-shaped electrode, which is screwed by means of a cylindrical screw (17) to an intermediate piece (18) that is connected to a ribbed insulator (19) which, with the aid of a second cylindrical screw (20), is fastened to a longer link piece (21), and **in that** a shorter link piece (22) is connected to a holder (23), which is mounted in a height-adjustable and horizontally adjustable carriage (24).

9. Device according to Claim 8, **characterized in that** a voltage of 5 to 15 kV is applied to the disc-shaped fourth electrode (16), and **in that** the distance of the fourth electrode (16) from the surface of the take-off roll (1) is 3 to 30 mm.

10. Device according to Claim 8, **characterized in that** a voltage in the range from 4 to 12 kV is applied to the double strip (9), and a voltage of 5 kV to 15 kV is applied to the disc-shaped electrode (16).

## Revendications

1. Dispositif pour l'application d'un film (3) sortant d'une filière plate (2) sur un tambour de tirage (1) rotatif, comprenant au moins deux électrodes disposées parallèlement et à faible distance par rapport à la surface du tambour de tirage (1) et sur lesquelles est appliquée une tension électrique, la première électrode étant constituée par un premier ruban métallique (4) et la deuxième électrode par un deuxième ruban métallique (5) similaire, les deux rubans métalliques (4, 5) formant un ruban double (9), étant reliés à une première source de courant (25) et présentant respectivement une arête de ruban (6, 7) convergente qui est dirigée sur la surface du tambour de tirage (1).

2. Dispositif selon la revendication 1, **caractérisé en ce que** la distance entre les arêtes (6, 7) des rubans métalliques (4, 5) est de 0,1 à 15 mm, et que la tension appliquée sur le ruban double (9) est de l'ordre de 4 à 12 kV.

3. Dispositif selon la revendication 1, **caractérisé en ce qu'**au-dessus du ruban double (9) est disposée une électrode (8) supplémentaire sur laquelle est appliquée une tension d'une deuxième source de courant (26) supplémentaire à la tension électrique de la première source de courant (25) pour le ruban double (9).

4. Dispositif selon la revendication 3, **caractérisé en ce que** la tension appliquée sur l'électrode (8) supplémentaire est de l'ordre de 5 kV à 15 kV.

5. Dispositif selon la revendication 3, **caractérisé en ce que** l'électrode (8) supplémentaire est une électrode annulaire avec une section transversale circulaire avec un diamètre de 10 à 100 mm, notamment de 75 mm, et **en ce que** l'électrode (8) supplémentaire est disposée 3 à 30 mm verticalement au-dessus du point d'application du film (3) sur le tambour de tirage (1).

6. Dispositif selon la revendication 1, **caractérisé en ce que** la distance horizontale et la distance verticale de la filière plate (2) par rapport au sommet du tambour de tirage (1) sont respectivement de 15 à 90 mm, **en ce que** l'axe de la filière plate forme un angle de 20° à 40° avec la verticale (S) à travers le sommet du tambour de tirage (1), et **en ce que** le tambour de tirage (1) présente un diamètre (D) de 600 à 1800 mm.

7. Dispositif selon la revendication 1, **caractérisé en ce que** l'inclinaison du ruban double (9) par rapport à la verticale (S) à travers le sommet du tambour de tirage (1) est de 20° à 40°, et **en ce que** la distance du premier ruban métallique (4) le plus proche de la verticale (S) est de l'ordre de 30 à 100 mm par rapport à la verticale (S).

8. Dispositif selon la revendication 3, **caractérisé en ce que** l'électrode (16) supplémentaire est une électrode en forme de disque, qui est vissée à l'aide d'une vis cylindrique (17) sur un élément intermédiaire (18) relié à un isolateur (19) rainuré, qui à l'aide d'une deuxième vis cylindrique (20) est fixé sur une pièce d'articulation plus longue (21), et **en ce qu'**une pièce d'articulation plus courte (22) est reliée à un support (23) qui est logé dans un chariot (24) mobile dans le sens de la hauteur et horizontal.

9. Dispositif selon la revendication 8, **caractérisé en ce que** l'électrode (16) supplémentaire en forme de disque est alimentée par une tension de 5 à 15 kV, et **en ce que** la distance de la quatrième électrode (16) par rapport à la surface du tambour de tirage (1) est de 3 à 30 mm.

10. Dispositif selon la revendication 8, **caractérisé en ce que** le ruban double (9) est alimenté par une tension de l'ordre de 4 à 12 kV et l'électrode (16) en forme de disque par une tension de 5 kV à 15 kV.
